# EUROPEAN PATENT APPLICATION

(11) **EP 4 697 572 A1**
(43) Date of publication of application: **18.02.2026**
(21) Application number: 24194093.1
(22) Date of filing: 12.08.2024
(51) Int. Cl.: H02K 15/40, H02K 7/18, H02K 7/102, F03D 13/00

(54) **ASSEMBLY OF A ROTOR OF AN ELECTRICAL MACHINE**

(71) Applicant: Siemens Gamesa Renewable Energy A/S, 7330 Brande (DK)
(72) Inventor: Kraemer, Boy Dario, 27472 Cuxhaven (DE)
(74) Representative: SGRE-Association

(57) **Abstract**

It is described a method and arrangement (1) for mounting a stiffening ring (2), in particular brake disk, to a rotor house (3) of an electrical machine, comprising: a carrier frame (4) equipped with a driving system (5) adapted to move along a circumference (6) of the rotor house (3); at least one fastening device (10) mounted at the carrier frame (4), the fastening device comprising a torque spindle and being adapted to fasten a bolt (37) through a stiffening ring hole (11) into a hole in the rotor house (3).

## Description

### Field of invention

The present invention relates to an arrangement and to a corresponding method of mounting a stiffening ring to a rotor house of an electrical machine. Furthermore, the present invention relates to a method of manufacturing an electrical machine, in particular a generator of a wind turbine.

### Art Background

For manufacturing or assembling a rotor of an electrical machine, it may conventionally be required to connect a brake disk to a front face of a rotor house. Conventionally, the brake disk is bolted manually to the rotor house which is very cumbersome and time- and cost-intensive. Fastening the generator brake disk to the rotor house involves to mount the two components to each other by means of a bolted connection. Conventionally, the fastening is done manually with a handheld torque tool and reaction bar. The placement of fasteners (bolt, washer, nut, etc.) is also done by an operator manually.

EP 4 063 647 A1 discloses a tightening device for a wind turbine configured to fasten and/or tighten a plurality of fastening means to a fastening target object, wherein the fastening means are arranged in a fastening means circle. However, a reliable and fast operation cannot be ensured.

Thus, there may be a need for an arrangement and a corresponding method for mounting a stiffening ring, in particular brake disk, to a rotor house of an electrical machine in a reliable and fast manner. Furthermore, there may be a need for a method of manufacturing an electrical machine, in particular generator of a wind turbine.

The need may be satisfied by the subject-matter of the independent claims. The dependent claims specify particular embodiments of the present invention.

### Summary of the Invention

This need may be met by the subject matter according to the independent claims. Advantageous embodiments of the present invention are described by the dependent claims.

According to an embodiment of the present invention it is provided an arrangement for mounting a stiffening ring, in particular brake disk, to a (front surface of a) rotor house of an (permanent magnet) electrical machine, comprising: a carrier frame equipped with a driving system adapted to move along a circumference of the rotor house; at least one fastening device mounted at the carrier frame, the fastening device comprising a torque spindle (e.g. comprising an electric motor) and being adapted to fasten (e.g. to screw) a fastening element (e.g. a bolt, a stud and/or a nut) through a brake disk hole into a hole in the rotor house.

The electrical machine may in particular be a permanent magnet electrical machine, in particular a generator of a wind turbine. The arrangement may be utilized or suitable for manufacturing an assembly comprising the rotor house and the stiffening ring, in particular brake disk. The arrangement may also be utilized for manufacturing an electrical machine.

The stiffening ring may in particular comprise or be formed by a circular ring, in particular washer-shape. By forming the assembly between the stiffening ring and the rotor house, the rigidity and strength in particular regarding desired circular or cylindrical shape may be improved. According to embodiments of the present invention, the stiffening ring may provide a function as a brake disk for providing the possibility to brake the rotor in the assembled electrical machine when needed. In other embodiments, the stiffening ring does not provide a function or a purpose for serving as a brake disk.

The rotor house may substantially be shaped as a circular cylinder. In the completely assembled rotor, the rotor house may be equipped with for example permanent magnets which are mounted in an axial direction (parallel to a symmetry axis or a cylinder symmetry axis), for example at an inner shell surface of the rotor house, in order to form an outer rotor. In this embodiment, a stator of the electrical machine may be arranged radially inwards from the assembled rotor.

The carrier frame may be provided or may serve as a carrier or holder or supporter or vehicle or wagon at which plural components for performing the mounting may be connected or mounted. The carrier frame may for example comprise plural bars or a scaffold at which in a flexible manner at different predetermined positions or locations, components of the arrangement may be mounted.

The stiffening ring may have been previously aligned and placed on a front face surface of the rotor house, in particular a front face of a cylindrical metallic wall. According to embodiments of the present invention, fixing pins may already be inserted in pinholes for securely arranging and aligning the stiffening ring relative to the rotor house. In other embodiments, no pins may be present or may be required.

The arrangement may be considered as a robot system for completely autonomously performing the task of connecting the stiffening ring to the rotor house by fastening plural bolts from a front surface of the stiffening ring into holes which are present in the stiffening ring and in the rotor house. For example, the bolt holes in the rotor house may have an inner thread and/or the bolt holes in the stiffening plate do not have an inner thread. For mounting the stiffening ring to the rotor house, differently sized bolts, studs and/or nuts may be utilized which may be supported by the arrangement.

When moving along the circumference of the rotor house, the carrier frame and in general the entire arrangement may partly be supported or be in contact with the front surface of the stiffening ring and/or also with an outer shell surface of the rotor house. Propulsion of the arrangement by means of the driving system may be achieved by providing a propulsion force between the outer shell of the rotor house and the arrangement. The propulsion force may be acting in the circumferential direction. Thereby, a reliable propulsion or movement may be achieved.

For guiding the carrier frame along the circumference, one or more guiding mechanisms may be applied or may be provided, for example involving one or more circular traces, for example provided on the front surface of the stiffening ring and/or providing for example magnetic forces between portions of the arrangement radially outwards from the shell surface of the rotor house and the rotor house.

The (at least one or more) fastening device may be adapted and/or may be equipped with fastening device position adjustment system, such as to at least adjust its position in the radial and/or circumferential direction and/or in the axial direction along which direction a bolt is to be inserted and is to be fastened into a stiffening ring bolt hole and a rotor house bolt hole. The fastening device position adjustment system, as will be described below, may be provided for allowing the fastening device to be adjusted regarding its position in the lateral plane, i.e., in the circumferential direction and radial direction.

The arrangement may simplify the mounting procedure and may also ensure a standardized procedure, thereby improving the manufacturing method and then also improving the assembly of the stiffening ring and the rotor house.

According to an embodiment of the present invention, the driving system comprises at least one, magnet comprising or not magnet comprising, driving wheel (and/or non-driving, rolling wheel) driven (or not driven) by a, in particular stepping, motor, the driving wheel being configured to be in contact with an outer shell surface of the rotor house or stiffening ring, wherein rotation of the driving wheel causes movement of the carrier frame along the circumference, the driving wheel being configured to be controlled to cover a defined travel distance on the outer shell surface, in particular to cover a defined number of travel steps.

When at least one driving (and/or non-driving) wheel is provided in the specified manner, movement along the circumference may be easily achieved by rotating the driving wheel and following a straight line, without requiring to turn the rotation axis of the driving wheel but keeping the rotation axis of the driving wheel essentially parallel to the axial direction. By furthermore providing guiding mechanisms or guiding forces, the driving wheel may then move along the circumference (of the rotor house and/or the stiffening ring).

When the driving wheel is driven for example by a stepping motor, also the number of steps the motor is actuated to move can be controlled thereby also enabling to at least estimate the distance which the outer circumference of the driving wheel contacting the outer shell surface of the rotor house as covered. Thereby, it is allowed to move the carrier frame and the entire arrangement along a defined distance along the circumference of the outer shell surface of the rotor house. Thereby, for example, it is possible to exactly reach a next or a desired bolt hole into which the next bolt is to be inserted or fastened (e.g. screwed).

In particular, the arrangement may comprise two or more driving wheels which are driven by a motor and/or two or more driving (and/or non-driving) wheels which are not driven by a motor. For example, the arrangement may comprise one or more pairs of wheels, wherein wheels of each pair are for example located as at a substantially same axial position but which are spaced apart in the circumferential direction in each pair. For example, the arrangement may comprise two pairs of driving wheels (one or more being driven by a motor) which are located at different axial positions and/or which are located at different circumferential positions. Thereby, the plural driving wheels may contact the outer shell surface of the rotor house at plural contact areas which are distributed in the axial direction and also the circumferential direction. Thereby, a reliable movement along a predetermined path may be enabled.

The arrangement may comprise rolling wheels which are in contact and roll on the outer shell surface of the rotor house but which are not driven by a motor.

According to an embodiment of the present invention, the arrangement further comprises at least one magnet holding member, in particular comprising a permanent magnet or an electro magnet, mounted at the carrier frame such as to exert an attractive force, in particular in a radial direction, to the outer shell of the rotor house or stiffening ring.

The magnet holding member have the function to draw the entire arrangement radially inwards towards the outer shell surface of the rotor house or stiffening ring such that for example all driving wheels and/or rolling wheels are in fact in contact and stay in contact with the outer shell surface of the rotor house during the movement, thereby ensuring that the arrangement moves along the circumference of the rotor house and stiffening ring thereby avoiding that the arrangement falls off the rotor house or the stiffening ring.

According to an embodiment of the present invention, at least one magnet holding member comprises at least one of: a contacting magnetic roller adapted to be in contact with and to roll on the outer shell of the rotor house; a non-contacting magnet member adapted not come in contact with the outer shell of the rotor house.

The magnetic roller may be one example of a driving wheel or a rolling wheel which is mentioned above. The magnetic holding force may be provided when the rotor house for example comprises steel being a ferromagnetic material. The magnetic roller may for example comprise one or more permanent magnets. One or more non-contacting magnet members may for example be arranged between two wheels, either driving wheel or rolling wheel, in order to draw the two driving or rolling wheels of the pair of wheels towards the outer shell surface of the rotor house or stiffening ring. In particular, a pair of rolling or driving wheels may be hold by a bracket or scaffold which may be mounted at the carrier frame providing therebetween at least one joint providing freedom to rotate or turn around an axis parallel to the axial direction. In particular, all driving wheels or rolling wheels or magnetic rollers of the arrangement which are intended to contact the outer shell surface of the rotor house may have respective rotation axes aligned to be parallel with the axial direction (of the rotor house).

According to an embodiment of the present invention, the arrangement comprises a travel distance monitoring system for monitoring a travelled distance when the carrier frame is moved along the circumference. The travel distance monitoring system then allows to appropriately control the driving system, in order to for example move (forward or backward) a predetermined distance or to a desired location of a bolt hole next to be considered into which a next bolt is to be fastened. The travel distance monitoring system may comprise optical and/or mechanical and/or electronic and/or mechanoelectronic components.

According to an embodiment of the present invention, the travel distance monitoring system comprises: a travel distance monitoring wheel mounted at the carrier frame and being adapted to be in contact with and roll on an outer shell surface of the rotor house or stiffening ring; a revolution monitor adapted to monitor rotation, in particular covered distance or steps, of the travel distance monitoring wheel.

The travel distance monitoring wheel may be rotated when in contact with the outer shell surface of the rotor house or stiffening ring due to friction forces. The travel distance monitoring system may provide distance data of covered or travelled distance by the carrier frame, for example to a controller system of the arrangement. Thereby, exactly positioning the carrier frame to a desired or predetermined position may be enabled.

According to an embodiment of the present invention, the arrangement further comprises at least one air cushion generating member including an air capture bowl or cup (or air capturing structure) mounted at a carrier frame to face a front face surface of the stiffening ring, wherein the air cushion generating member is adapted: to selectively generate an air cushion within the and between the air capture bowl and a portion of the front face surface of the stiffening ring during movement of the carrier frame and/or to selectively avoid an air cushion between the air cushion delimiting member and a portion of the front face surface of the stiffening ring during standstill of the carrier frame or during actuating the fastening device.

The air cushion between the air capture bowl and the front surface of the stiffening ring may allow to carry the entire arrangement slightly above the front surface of the stiffening ring such that the arrangement floats slightly above the stiffening ring and is not in contact with the front surface of the stiffening ring. While floating the arrangement, however, the one or more driving wheels or rolling wheels may still be in contact with the outer shell surface of the rotor house and/or stiffening ring. The air cushion may be generated in the time interval while the carrier frame is intended to be moved. Thereby, the movement may be enabled and performed in a reliable manner. In particular, the arrangement may comprise plural air cushion generating members or at least plural air capture bowls, for example two to ten air capture bowls which are arranged or mounted at the carrier frame at a substantially same axial position but at different circumferential positions. The air capture bowls may for example be arranged in an arc shape. The air capture bowls may capture in an inner space air which is provided for example from a center region of each air capture bowl. The air capture bowls may for example provide air cushions having substantially circular shape and having an extended surface area, providing reliable floating of the arrangement.

Additionally or alternatively the arrangement may comprise at least one wheel and/or roller mounted at the carrier frame to contact and roll on a front face surface (26) of the stiffening ring.

According to an embodiment of the present invention, the arrangement further comprises at least one or: at least one resting member having a plane contact surface mounted at the carrier frame and configured to be in contact and rest on a portion of front face surface of the stiffening ring during standstill of the carrier frame and/or during actuating the fastening device; and/or at least one suction cup mounted at the carrier frame to face a front face surface of the stiffening ring, the suction cup being connected to an air suction device, wherein the air suction device is adapted: to selectively avoid sucking air from the suction cup during movement of the carrier frame and/or to selectively suck air from the suction cup during standstill of the carrier frame or during actuating the fastening device, such that an edge of the suction cup contacts the front surface of the stiffening ring. The suction cup sucked to the front surface of the stiffening ring may provide a strong attachment for holding the arrangement at a fixed position.

The resting member or one or more resting members may be provided substantially in the same or close by axial position as respective lower parts of the air capture bowls. For example, the number of resting members provided may substantially match a number of air capture bowls. The resting members may comprise at a lower face a surface providing high friction force with the front surface of the stiffening ring. Operating the air cushion generating member may allow to lift the entire arrangement from the front surface of the stiffening ring. Further, by not generating the air cushion, the entire arrangement may be lowered to come in contact, over or via the one or more resting members, with the front surface of the stiffening ring. When standing still, the entire arrangement may seat on the stiffening ring via the one or more resting members.

To increase the friction force of the resting members, the machine may alternatively or additionally also be equipped with one or more suction cups and/or one or more electromagnets to pull down the equipment to the stiffening ring, increasing the vertical (weight) force.

According to an embodiment of the present invention, the arrangement further comprises at least one bolt hole detection system, in particular for every fastening device, in particular including a camera system having a field of view covering an operating region of the fastening device, mounted at the carrier frame and adapted to acquire bolt position data relating to a bolt hole in the stiffening ring; a fastening device position adjustment system adapted to adjust a lateral position of the fastening device.

The bolt hole detection system may enable to accurately locate the bolt holes. When, after moving the entire arrangement a particular distance, it turns out by the data provided by the bolt hole detection system, that a bolt hole is not accurately positioned relative to the fastening device or the fastening device is not appropriately positioned relative to the detected bolt hole, the fastening device position adjustment system may be actuated in order to accurately place the fastening device above the bolt hole, by laterally repositioning the fastening device.

According to an embodiment of the present invention, the arrangement further comprises a bolt magazine holding plural bolts, for providing a bolt to the fastening device; a bolt fetching system, in particular comprising an x-y-z translatable bolt grabbing member, adapted to bring a bolt from the magazine to at least one of the fastening devices.

Thereby, it is enabled to carry with the arrangement a plurality of bolts, in particular bolts having different sizes and/or characteristics. Thereby, flexibility for mounting the stiffening ring is improved and no separate component is required for providing a sufficient number of bolts in order for example complete the mounting. The bolt magazine may for example hold as many bolts as required to mount the stiffening ring to the rotor house, wherein the number of bolts may for example be equal or slightly larger than the number of bolt holes which are provided in the stiffening ring and/or the rotor house. Thereby, the mounting process may be accelerated.

According to an embodiment of the present invention, the arrangement further comprises a control system adapted: to control the driving system, in particular in dependence of a covered distance to move the carrier frame, in particular such that the fastening device is placed to a predetermined position and/or over a hole in the stiffening ring; and/or to control the driving system to stop movement of the carrier frame; and/or to control the motor of the driving wheel to turn a defined angle range and/or a defined number of steps; and/or to control the driving system in dependence of covered distance as monitored by the travel distance monitoring system; and/or to control at least one fastening device, in particular several fastening devices to fasten a fastening element (e.g. bolt) through a brake disk hole into a hole in the rotor house, in particular with a predetermined torque; and/or to control the angular position of the bolt head hex to align bolt and socket of the torque spindle; and/or to detect whether a bolt has already been mounted to the bolt hole prior to placing a bolt with the grabbing system; and/or to control the air cushion generating member for selectively generating and avoiding the air cushion; and/or to control the fastening device position adjustment system, in particular based on the bolt position data; and/or to control the bolt fetching system to bring a bolt from the magazine to at least one of the fastening devices; and/or activate/deactivate one or more suction cups or electromagnets to increase friction force.

The control system may be configured as one or more control system units or modules which is provided in an integrated manner or is distributed across the several components of the arrangement. For example, each component, for example the driving system and/or the motor of the driving wheel and/or the fastening device and/or the air cushion generating member and/or the fastening device position adjustment system may comprise their own control functionality. However, a supervisory or master controller may control all these component controllers. In particular, the control system may be adapted to carry out the entire mounting procedure by controlling the above-mentioned components or at least a selection of the mentioned components.

It should be understood, that features, individually or in any combination, disclosed, provided, explained or applied to an arrangement for mounting a stiffening ring to a rotor house, may also, individually or in any combination, be applied or provided or employed to a method of mounting a stiffening ring to a rotor house of an electrical machine and vice versa according to embodiments of the present invention.

According to an embodiment of the present invention it is provided a method of mounting a stiffening ring, in particular brake disk, to a rotor house of an electrical machine, comprising: moving, using a driving system, a carrier frame along a circumference of the rotor house; fastening, using a fastening device mounted at the carrier frame and comprising a torque spindle, a bolt through a brake disk hole into a hole in the rotor house, thereby in particular using an arrangement according to any one of the preceding claims, wherein the stiffening ring in particular comprises plural stiffening ring bolt holes and is placed with a back face surface on a front surface of the rotor house, the rotor house face surface in particular comprising plural rotor house bolt holes, in particular having inner threads.

The method may in particular be suitable for mounting a stiffening ring to a rotor house of a generator of a wind turbine. In particular, for carrying out the method, an arrangement for mounting a stiffening ring to a rotor house according to embodiments of the present invention may be utilized.

According to an embodiment of the present invention it is provided a method of manufacturing an electrical machine, comprising: mounting a stiffening ring, in particular brake disk, to a rotor house of the electrical machine according to the preceding embodiment; assembling the rotor house with a stator.

The electrical machine may for example be a generator of a wind turbine.

One or more of the below mentioned features may be comprised in embodiments of the present invention.

The bolt fastening system or the bolt fastening device may be adapted to control the torque of the fastened bolt, for example enabling to perform several subsequent steps of tightening one or more of the bolts. The detection system may also enable to detect a midpoint of a hole and/or to detect a hexagon of a head of a bolt and its angular position in relation to the fastening device's socket. Thereby, the fastening device may appropriately be controlled in order to engage a partly tightened bolt and further tighten the respective bolt.

When actuating the fastening device, the reaction force may be received by the rotor house by friction-fit and/or form-fit. The camera when present may count the number of holes passed for example and may also detect, by performing image processing, an exact lateral position of a hole intended to be addressed. The one or more components may be numerically controlled (NC-components). The reaction forces may be compensated/directed to the rotor house and/or the brake disk. The bolt providing system may also be considered as a robot system providing bolts from the bolt carrier/storage/magazine.

The automated brake disk fastening (to the rotor house) may be based on the arrangement for mounting the stiffening ring to the rotor house, which may also be considered or referred to as wagon/system carrier that runs on the brake disk and/or rotor house with wheels and/or air cushion and is driven by friction or magnetic wheels on the outer bolt circle. Redundant sensors may monitor the position of the brake disk or in particular the brake disk holes. The system may utilize magnetic wheels or electromagnets with wheels to stay on track or the brake disk. The system may be NC-based and may fasten various different bolt circle diameters and numbers of bolts, segments and patterns. Offset/tolerance compensation may be performed with the help of a camera and an X-, Y-NC system. The reaction forces may be introduced through the system into the brake disk. Therefore, the system does not require a reaction bar. A robot/cobot or X, Y, Z system provides the fastening elements (bolts, etc.) from a bolt carrier to the fastening system (electrical torque spindles). Power supply may be provided from center with a plugged connection.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates an arrangement for mounting a stiffening ring to a rotor house according to an embodiment of the present invention together with the stiffening ring and the rotor house;
Fig. 2 illustrates the arrangement also illustrated in Fig. 1 separately;
Fig. 3 illustrates the arrangement illustrated in Figs. 1 and 2 as seen along the axial direction from below;
Fig. 4 illustrates details of the arrangements illustrated in Figs. 1, 2, 3 and Fig. 5 further illustrates other details of the arrangement illustrated in Figs. 1 to 3.

### Detailed Description

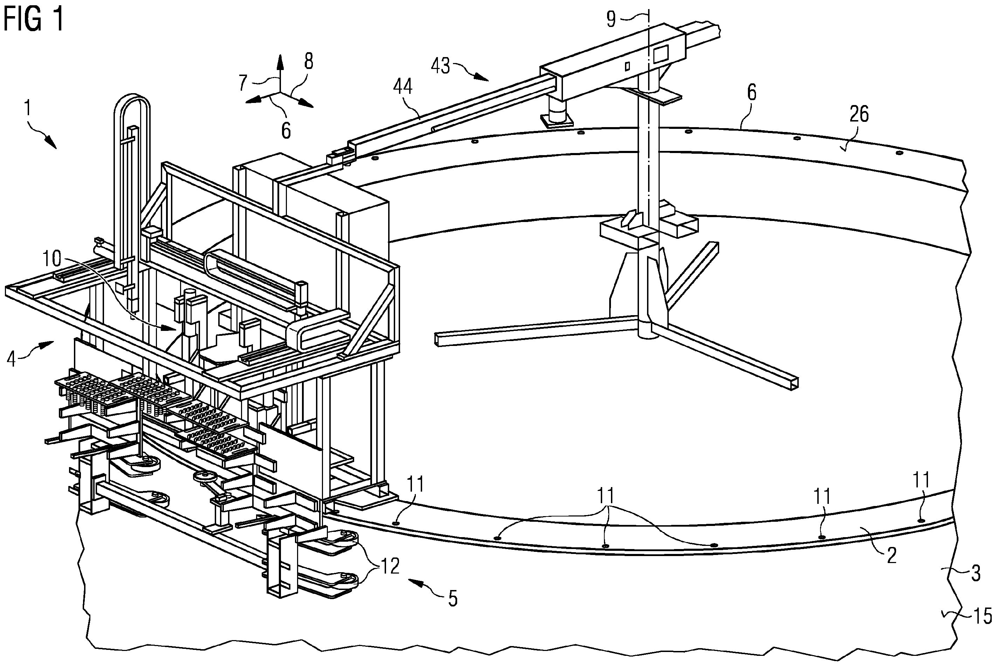

The arrangement 1 for mounting a stiffening ring 2 to a rotor house 3 of an electrical machine illustrated in Fig. 1 comprises a carrier frame 4 equipped with a driving system 5 adapted to move along a circumference 6 of the rotor house 3. In Fig. 1, the circumferential direction is indicated with reference sign 6, the axial direction (Z-direction) is indicated with reference sign 7 and the radial direction is indicated with reference sign 8. Those directions 6, 7, 8 are defined with respect to the cylinder symmetry axis 9 of the rotor house 3 and also the stiffening ring 2.

The arrangement 1 further comprises at least one fastening device 10 mounted at the carrier frame 4 the fastening device comprising a torque spindle and being adapted to fasten a bolt through a brake disk hole 11 into a hole (not visible in Fig. 1) in the rotor house 3.

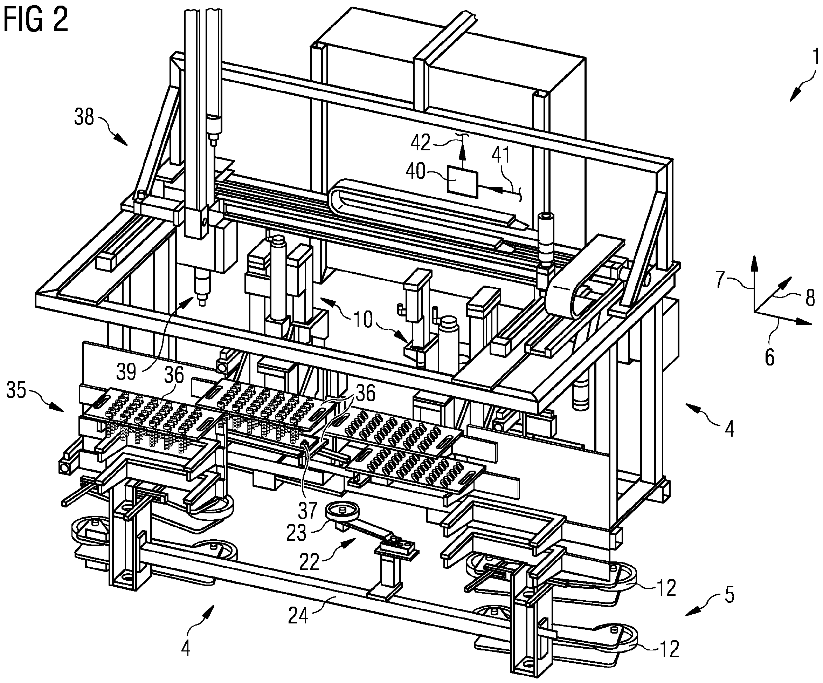

In Fig. 2 it can be appreciated that the arrangement 1 comprises two fastening devices 10 which are spaced apart in the circumferential direction 6 or spaced apart in a direction which is tangential to the circumferential direction 6. As can be recognized in Fig. 2, the arrangement 1 comprises plural driving or rolling wheels 12, which partly may be driven by a motor or partly may not be driven by a motor. Actuating one or more of driving wheels 12 causes the movement of the carrier frame 4 and thereby the entire arrangement 1.

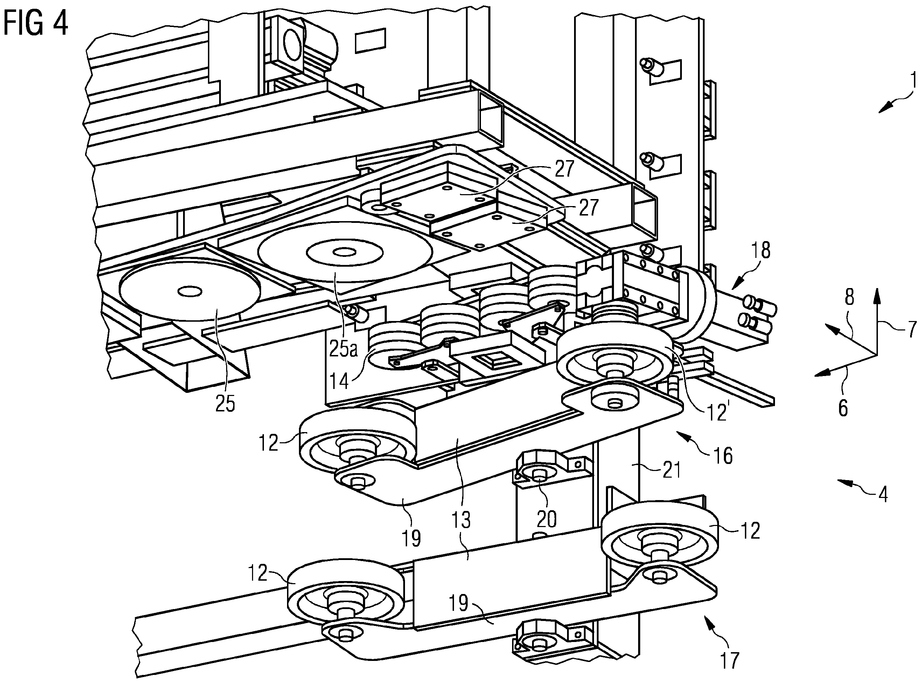

As can be seen for example in Fig. 4 showing a detail of the arrangement 1 as seen from a radially inward point, magnet holding members 13, 14 which exert an attractive force in the radial direction 8 in order to draw the carrier frame 4 and thereby the entire arrangement 1 towards the outer shell of the rotor house 3. The embodiment illustrated in Fig. 4 comprises a contacting magnet roller 14 which is adapted to be in contact with and to roll on the outer shell 15 of the rotor house 3. Alternatively or additionally, the arrangement may comprise one or more non-contacting magnet member(s) 13 which are adapted to not come in contact with the outer shell 15 of the rotor house 3.

In particular, Fig. 4 illustrates two pairs of driving or non-driving wheels, in particular a first pair 16 and a second pair 17 of driving or non-driving wheels 12, 12'. The driving wheel 12' is connected to an electric motor 18 which drives the driving wheel 12. The pair 16 of wheels 12, 12' comprises the non-driving wheel 12 and is arranged approximately at the same axial position as the driving wheel 12' but is spaced apart in the circumferential direction 6. The pair of wheels 12, 12' is mounted at a bracket or scaffold 19 which is connected via a joint 20 to the carrier frame 4, in particular a carrier bar 21 of the carrier frame 4. Another pair 17 of wheels 12 is also mounted using a joint to the scaffold bar 21 of the carrier frame 4 but is spaced apart in the axial direction from the first pair 16 of wheels. Between the wheels of each pair in the illustrated embodiment, a non-contacting magnet member 13 is arranged.

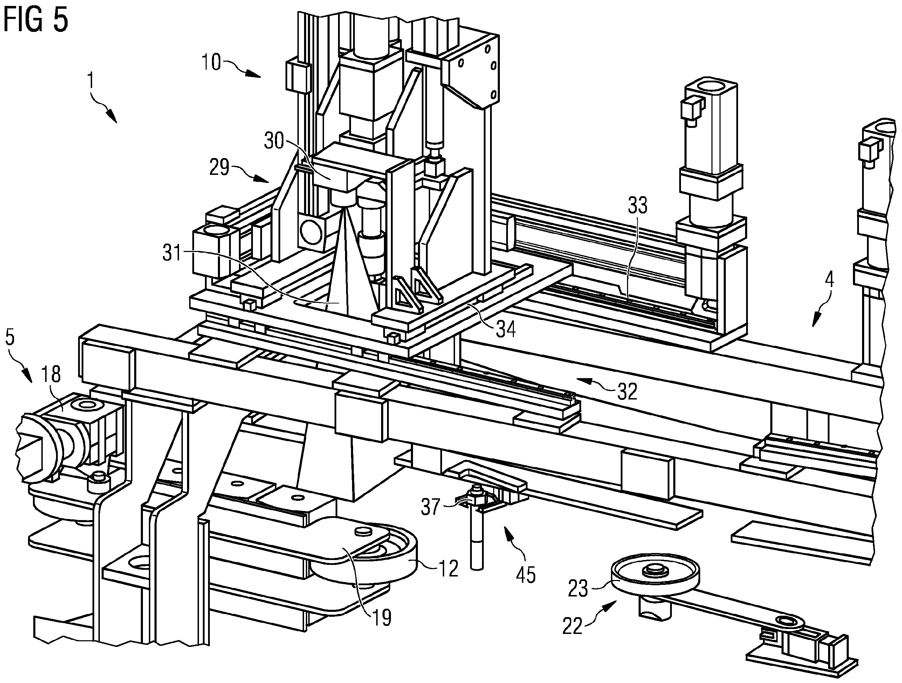

As can be seen for example in **Figs. 2** **and** **5****,** the arrangement 1 comprises a travel distance monitoring system 22 for monitoring a travel distance when the carrier frame 4 is moved along the circumference 6. In the illustrated embodiment, the travel distance monitoring system comprises at least one travel distance monitoring wheel 23 mounted at the carrier frame 4, in particular at a scaffold bar 24 of the carrier frame 4 and is adapted to be in contact with and roll on the outer shell 15 of the rotor house 3.

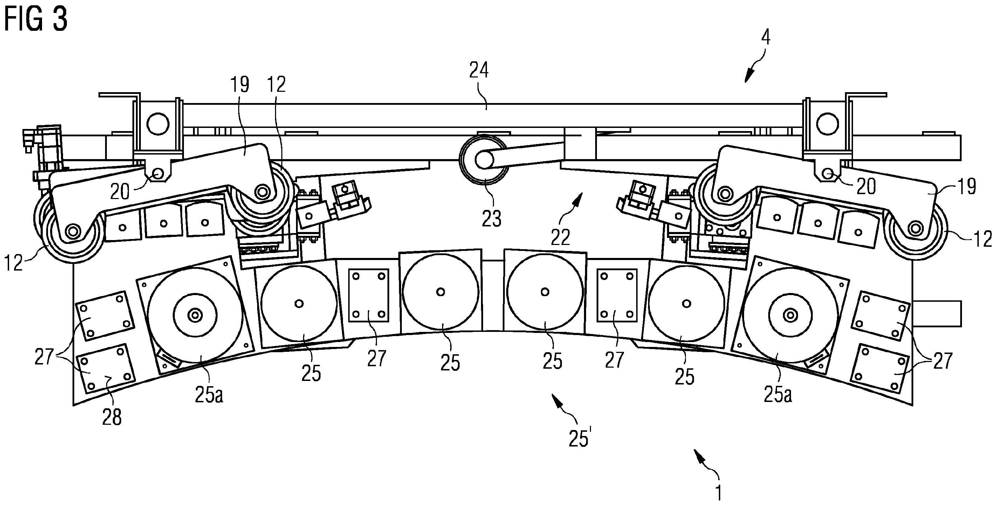

As can be seen for example in Fig. 4 and 3 (showing a view from a bottom side along the axial direction 7), the arrangement 1 comprises plural air capture bowls 25 and suction cups 25a which are mounted at the carrier frame to face a front face surface 26 (see Fig. 1) of the stiffening ring 2. The arrangement comprises not illustrated air cushion generating members providing for example compressed air towards the plural air capture bowls 25, in order to generate an air cushion between the respective air capture bowls and the front surface 26 of the stiffening ring 2.

The arrangement may comprise not illustrated at least one air suction device connected to suction cup 25a, in order to partly evacuate the suction cup, to draw respective suction cup 25a to the front surface 26 of the stiffening ring 2.

As can for example be seen in Figs. 3, 4, the arrangement 1 comprises plural resting members 27 having a plane contact surface 28 and being mounted at the carrier frame 4 and configured to be in contact and rest on a portion of a front face surface 26 of the stiffening ring 2 during standstill of the carrier frame 4 and/or during actuating the fastening device 10.

As can for example be seen in Fig. 5, the arrangement 1 partly illustrated in Fig. 5 comprises at least one bolt hole detection system 29 in the illustrated embodiment including a camera system 30 having a field of view 31 covering an operating region of the fastening device 10. The bolt hole detection system 29 is adapted to acquire bolt position data relating to a bolt hole in the stiffening ring. The arrangement further comprises a fastening device position adjustment system 32 comprising for example traces 33, 34 in the two lateral directions allowing to reposition the fastening device 10 in the two lateral directions.

As can for example be seen in Fig. 2, the arrangement 1 further comprises a bolt magazine 35 comprising plural magazine blocks 36 holding plural bolts 37 for providing a bolt to the fastening device 10. The arrangement further comprises a bolt fetching system 38, in particular comprising an X-Y-Z translatable bolt grabbing member 39 adapted to bring a bolt 37 from the magazine 35, 36 to at least one of the fastening devices 10.

The arrangement 1 further comprises a control system 40 is adapted to control one or more of the aforementioned components as is also detailed above. Thereby, the control system for example may receive input data 41, such as measurement data or state data, from one or more components and is adapted to send or supply control signals 42 to one or more of the aforementioned components, in order to carry out a method for mounting a stiffening ring to a rotor house.

The arrangement 1 illustrated in Figs. 1 to 5 may be utilized during a method of mounting a stiffening ring to a rotor house. Electrical energy may be provided to the arrangement 1 via a supply arm or supply equipment 43 as is illustrated in Fig. 1. The supply arm 44 may serve partly to provide a holding function to hold the arrangement 1 close to and in contact with the rotor house outer shell surface 15. The resting members may also refer to as friction pads. The air capture bowls may for example have a circular cross-section.

As can for example be seen in Fig. 5, the bolt providing system may comprise a bolt swivel equipment 45 which may be adapted to provide a bolt 37 in the correct orientation to the fastening device 10.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. Arrangement (1) for mounting a stiffening ring (2), in particular brake disk, to a rotor house (3) of an electrical machine, comprising:
a carrier frame (4) equipped with a driving system (5) adapted to move along a circumference (6) of the rotor house (3) ;
at least one fastening device (10) mounted at the carrier frame (4), the fastening device comprising a torque spindle and being adapted to fasten a bolt (37) through a stiffening ring hole (11) into a hole in the rotor house (3).

2. Arrangement according to the preceding claim, wherein the driving system (5) comprises at least one, magnet comprising or not magnet comprising, driving wheel (12, 12') driven by a, in particular stepping, motor (18), the driving wheel (12, 12') being configured to be in contact with an outer shell surface (15) of the rotor house (3) and/or stiffening ring (2), wherein rotation of the driving wheel causes movement of the carrier frame (4) along the circumference (6, 7),
the driving wheel being configured to be controlled to cover a defined travel distance on the outer shell surface, in particular to cover a defined number of travel steps.

3. Arrangement according to any one of the preceding claims, further comprising:
at least one magnet holding member (13, 14), in particular comprising a permanent magnet or an electro magnet, mounted at the carrier frame (4) such as to exert an attractive force, in particular in a radial direction (8), to the outer shell (15) of the rotor house (3) and/or stiffening ring (2).

4. Arrangement according to any one of the preceding claims, wherein at least one magnet holding member comprises at least one of:
a contacting magnetic roller (14) adapted to be in contact with and to roll on the outer shell of the rotor house and/or stiffening ring (2);
a non-contacting magnet member (13) adapted not come in contact with the outer shell of the rotor house.

5. Arrangement according to any one of the preceding claims, further comprising a travel distance monitoring system (22) for monitoring a travelled distance when the carrier frame (4) is moved along the circumference (6).

6. Arrangement according to any one of the preceding claims, wherein the travel distance monitoring system (22) comprises:
a travel distance monitoring wheel (23) mounted at the carrier frame (4) and being adapted to be in contact with and roll on an outer shell surface (15) of the rotor house (3) and/or stiffening ring (2);
a revolutions monitor adapted to monitor rotation, in particular covered distance or steps, of the travel distance monitoring wheel.

7. Arrangement according to any one of the preceding claims, further comprising at least one of:
at least one air cushion generating member (25') including an air capture bowl or cup (25) mounted at the carrier frame (4) to face a front face surface (26) of the stiffening ring (2),
wherein the air cushion generating member is adapted:
to selectively generate an air cushion within the and between the air capture bowl and a portion of the front face surface of the stiffening ring during movement of the carrier frame and/or
to selectively avoid an air cushion between the air cushion delimiting member and a portion of the front face surface of the stiffening ring during standstill of the carrier frame or during actuating the fastening device; and/or
at least one wheel and/or roller mounted at the carrier frame (4) to contact and roll on a front face surface (26) of the stiffening ring (2).

8. Arrangement according to any one of the preceding claims, further comprising at least one resting member (27) having a plane contact surface (28) mounted at the carrier frame (4) and configured to be in contact and rest on a portion of front face surface (26) of the stiffening ring (2) during standstill of the carrier frame and/or during actuating the fastening device.

9. Arrangement according to any one of the preceding claims, further comprising at least one suction cup (25a) mounted at the carrier frame (4) to face a front face surface (26) of the stiffening ring (2), the suction cup (25a) being connected to an air suction device,
wherein the air suction device is in particular adapted:
to selectively avoid sucking air from the suction cup during movement of the carrier frame and/or
to selectively suck air from the suction cup during standstill of the carrier frame or during actuating the fastening device, such that an edge of the suction cup contacts the front surface of the stiffening ring (2).

10. Arrangement according to any one of the preceding claims, further comprising:
at least one bolt hole detection system (29), in particular for every fastening device, in particular including a camera system (30) having a field of view (31) covering an operating region of the fastening device (10), mounted at the carrier frame (4) and adapted to acquire bolt position data relating to a bolt hole in the stiffening ring;
a fastening device position adjustment system (32) adapted to adjust a lateral position of the fastening device (10) .

11. Arrangement according to any one of the preceding claims, further comprising:
a bolt magazine (35, 36) holding plural bolts (37), for providing a bolt to the fastening device;
a bolt fetching system (38), in particular comprising an x-y-z translatable bolt grabbing member (39), adapted to bring a bolt from the magazine to at least one of the fastening devices.

12. Arrangement according to any one of the preceding claims, further comprising a control system (40) adapted:
to control the driving system, in particular in dependence of a covered distance to move the carrier frame, in particular such that the fastening device is placed to a predetermined position and/or over a hole in the stiffening ring; and/or
to control the driving system to stop movement of the carrier frame; and/or
to control the motor of the driving wheel to turn a defined angle range and/or a defined number of steps; and/or
to control the driving system in dependence of covered distance as monitored by the travel distance monitoring system; and/or
to control at least one fastening device, in particular several fastening devices, to fasten a bolt through a brake disk hole into a hole in the rotor house, in particular with a predetermined torque; and/or
to control the air cushion generating member for selectively generating and avoiding the air cushion; and/or
to control the fastening device position adjustment system, in particular based on the bolt position data; and/or
to control the bolt fetching system to bring a bolt from the magazine to at least one of the fastening devices; and/or

13. Method of mounting a stiffening ring (2), in particular brake disk, to a rotor house (3) of an electrical machine, comprising:
moving, using a driving system (5), a carrier frame (4) along a circumference (6) of the rotor house (3);
fastening, using a fastening device (10) mounted at the carrier frame (4) and comprising a torque spindle, a bolt (37) through a stiffening ring hole (11) into a hole in the rotor house (3),
thereby in particular using an arrangement (1) according to any one of the preceding claims.

14. Method according to the preceding claim, wherein the stiffening ring comprises plural stiffening ring bolt holes (11) and is placed with a back face surface on a front surface of the rotor house (3), the rotor house face surface in particular comprising plural rotor house bolt holes, in particular having inner threads.

15. Method of manufacturing an electrical machine, comprising:
mounting a stiffening ring (2), in particular brake disk, to a rotor house (3) of the electrical machine according to one of the preceding claims 13 or 14;
assembling the rotor house (3) with a stator.
